# EUROPÄISCHE PATENTSCHRIFT

(11) **EP 1 943 744 B1**
(45) Veröffentlichungstag und Bekanntmachung des Hinweises auf die Patenterteilung: **27.06.2012**
(21) Anmeldenummer: 06828813.3
(22) Anmeldetag: 13.10.2006
(51) Int. Cl.: H04B 5/00

(54) **GERÄT ZUR AUFNAHME EINES MODULS MIT BERÜHRUNGSLOSER ÜBERTRAGUNG VON ENERGIE UND/ODER DATEN**
Apparatus for insertion of a module with contactless transmission of energy and/or data
Dispositif d'insertion d'un module avec transmission d'énergie et/ou de données sans contact

(30) Priorität: 28.10.2005 DE 102005052135
(43) Veröffentlichungstag der Anmeldung: 16.07.2008
(73) Patentinhaber: SEW-EURODRIVE GmbH & Co. KG, 76646 Bruchsal (DE)
(72) Erfinder: SCHMIDT, Josef, 76676 Graben-Neudorf (DE)
(74) Vertreter: Tüngler, Eberhard
(86) Internationale Anmeldenummer: PCT/EP2006/009900
(87) Internationale Veröffentlichungsnummer: WO 2007/048511

(56) Entgegenhaltungen:
- WO-A2-03/096139
- DE-A1- 10 258 075
- DE-C1- 19 719 730
- GB-A- 2 370 462
- US-A- 6 087 800

## Beschreibung

Die Erfindung betrifft einen Antrieb.

Als Geräte sind beispielsweise Umrichter oder Antriebe bekannt.

Aus der DE 102 58 075 A1 ist eine Vorrichtung zur kapazitiven Signalübertragung zwischen einem Feldgerät und einer externen Einheit bekannt.

Aus der GB 2 370 462 A ist eine Datenaustauschvorrichtung für eine Spielvorrichtung bekannt.

Aus der US 6 087 800 A ist ein Sanftanlaufgerät für einen Elektromotor bekannt.

Der Erfindung liegt daher die Aufgabe zugrunde, die hohe Varianz der Anwendungen, in welchen Geräte einsetzbar sind, mit möglichst wenig Bauteilen zu bedienen.

Erfindungsgemäß wird die Aufgabe bei dem Antrieb nach den in Anspruch 1 angegebenen Merkmalen gelöst.

Wichtige Merkmale der Erfindung sind, dass ein Modul in einer gehäusebildenden Ausnehmung des Gerätes einbringbar ist, wobei Energie und/oder Daten vom Antrieb an das Modul berührungslos übertragbar sind und das Modul Daten zurücksenden kann. Das Gerät ist also mit seiner Ausnehmung in hoher Schutzart ausgeführt und kann trotzdem Energie und Daten ans Modul übertragen. Das Modul kann Daten zurück senden. Somit ist Parametrierung des Geräts durch das Modul auch bei Anwendungen mit anspruchsvoller Umgebung ermöglicht.

Erfindungsgemäß ist das Gerät ein Antrieb. Von Vorteil ist dabei, dass bei solchen Geräten Parameter einzugeben sind und somit sein Bediengerät zu verbinden ist. Dabei sind nach Stand der Technik metallische Kontakte vorhandenen. Bei der Erfindung sind aber berührungslose Bedienmöglichkeiten realisierbar. Somit ist die Erfindung auch in rauer Industrieumgebung einsetzbar, beispielsweise mit herumspritzenden Flüssigkeiten und dergleichen. Solche Geräte sind sogar mit erweiterter Hardware ausführbar, so dass im Gerät eine Positionier- oder Ablauf -Steuerung, wie SPS, integriert ist. Auch hierbei ist die Software zu bedienen und daher eine Bedienerschnittstelle notwendig, die nun berührungslos verbindbar ist. Außerdem nutzt sich bei der Erfindung kein Steckverbinderkontakt ab und es treten auch keine anderen Verschleiße auf.

Erfindungsgemäß ist das Modul in der Ausnehmung des Antriebs mechanisch gehalten ist, insbesondere eingeklipst Ist.

Erfindungsgemäß umfasst der Antrieb zumindest einen Elektromotor und ein versorgende elektronische Schaltung, wie Umrichter oder Sanftanlaufelektronik oder dergleichen. Insbesondere umfasst der Antrieb ein Getriebe, das vom Elektromotor antreibbar ist. Von Vorteil ist dabei, dass der Antrieb als Kompaktantrieb ausführbar ist.

Erfindungsgemäß umfasst das Modul Eingabe- und/oder Anzeigemittel und/oder Steckverbinderschnittstelle. Von Vorteil ist dabei, dass wahlweise beliebig ausgeführte Module einsetzbar sind. Somit kann für jede Funktion oder Anwendung das passende Modul eingesetzt werden.

Erfindungsgemäß weist ein Modul eine 24 Volt-Versorgungsquelle für elektrisch mit dem Modul verbindbare weitere Geräte auf, wobei die Energie für die 24 Volt-Versorgungsquelle induktiv von einer Spule im Inneren des Gerätes an das Modul übertragen ist. Von Vorteil ist dabei, dass das Modul trotz der berührungslosen Versorgung eine Versorgung für einen Datenbus, wie Feldbus, oder andere Geräte bereit stellen kann.

Erfindungsgemäß ist das Gerät an Netzversorgungsleitungen angeschlossen, auf denen auch Daten zum Datenaustausch zwischen dem Gerät und weiteren Geräten höherfrequent aufmoduliert sind. Von Vorteil ist dabei, dass keine Leitungen zur Datenübertragung benötigt werden sondern schon vorhandene Leitungen nutzbar sind.

Bei einer vorteilhaften Ausgestaltung weist das Gerät eine mechanische, insbesondere eine kraft- oder formschlüssige, und elektromagnetische kontaktfreie, insbesondere induktive, Schnittstelle derart auf, dass Module mit entsprechender mechanischer und elektromagnetischer kontaktfreier, insbesondere induktiver, Schnittstelle wahlweise verbindbar sind. Von Vorteil ist dabei, dass das Modul mechanisch gehalten ist, beispielsweise einklipsbar und die elektrische Schnittstelle durch eine induktive oder auch optische ersetzt ist. In Weiterbildung sind also auch Infrarotschnittstellen ausführbar.

Bei einer vorteilhaften Ausgestaltung weist die Ausnehmung eine Kunststoffoberfläche zur äußeren Umgebung hin auf. Von Vorteil ist dabei, dass eine Isolationsfestigkeit zwischen den spannungsführenden Teilen des Geräts und des Moduls vorgesehen ist. Diese galvanische Trennung hat sicherheitstechnische Vorteile, erhöht also die Sicherheit des Gerätes.

Bei einer vorteilhaften Ausgestaltung ist das Gerät berührungslos, insbesondere induktiv aus einem Primärleiter, versorgt, in den ein mittelfrequenter Strom, insbesondere mit einer Frequenz zwischen 20 und 100kHz, eingespeist ist, wobei auf den Primärleiter auch Daten zum Datenaustausch zwischen dem Gerät und weiteren Geräten höherfrequent als mit der Mittelfrequenz des Stromes im Primärleiter aufmoduliert sind. Von Vorteil ist dabei, dass bei einem solchen System Daten zusammen mit der Energie galvanisch entkoppelt und berührungslos übertragbar sind. Besonderer Vorteil ist auch, dass zum Abtrennen des Gerätes ein mechanisches Entfernen des Primärleiters vom entsprechenden Sekundärteil des Geräts genügt. Der Primärleiterstrom kann ungestört weiter fließen und muss nicht abgeschaltet werden.

Bei einer vorteilhaften Ausgestaltung umfasst der Antrieb einen ersten Gehäusebereich, umfassend Elektromotor und gegebenenfalls Getriebe, und einen dritten Gehäusebereich, der mit dem ersten nur über einen zweiten verbunden ist. Von Vorteil ist dabei, dass der zweite Gehäusebereich mit Anschlussvorrichtungen und Übergabesteckverbindungen zum dritten Bereich hin sowie elektrische Anschlussvorrichtungen nach außen hin ausführbar ist. Somit ist eine elektrische Schnittstelle geschaffen zwischen dem dritten Gehäusebereich, der empfindliche und wartungsintensive Elektronik umfasst, und dem zweiten Gehäusebereich, der vorzugsweise robuste Verbindungstechnik ohne Halbleiter umfasst.

Bei einer vorteilhaften Ausgestaltung umfasst der zweite Gehäusebereich Anschlussvorrichtungen für die Versorgungsleitungen des Elektromotors umfasst und eine Steckverbindereinheit zur elektrischen Steckverbindung mit dem dritten Gehäuseteil. Von Vorteil ist dabei, dass das dritte Gehäuseteil einfach und schnell verbindbar und austauschbar ist während der zweite Teil die arbeitsintensiven Verdrahtungen und dergleichen umfasst.

Bei einer vorteilhaften Ausgestaltung sind die Gehäuseteile jeweils dicht und in hoher Schutzart verbunden. Von Vorteil ist dabei, dass das Gerät auch in rauer Umgebung einsetzbar ist.

Weitere Vorteile ergeben sich aus den Unteransprüchen.

### Bezugszeichenliste

- 1: Gehäuseteil
- 2: Gehäuseteil
- 3: Welle
- 4: Ausnehmung
- 5: Eingabe- und/oder Anzeigemittel
- 6: Module
- 7: elektrische Steckverbinderteile
- 20: Gehäuseteil
- 21: Gehäuseteil

Die Erfindung wird nun anhand von Abbildungen näher erläutert:

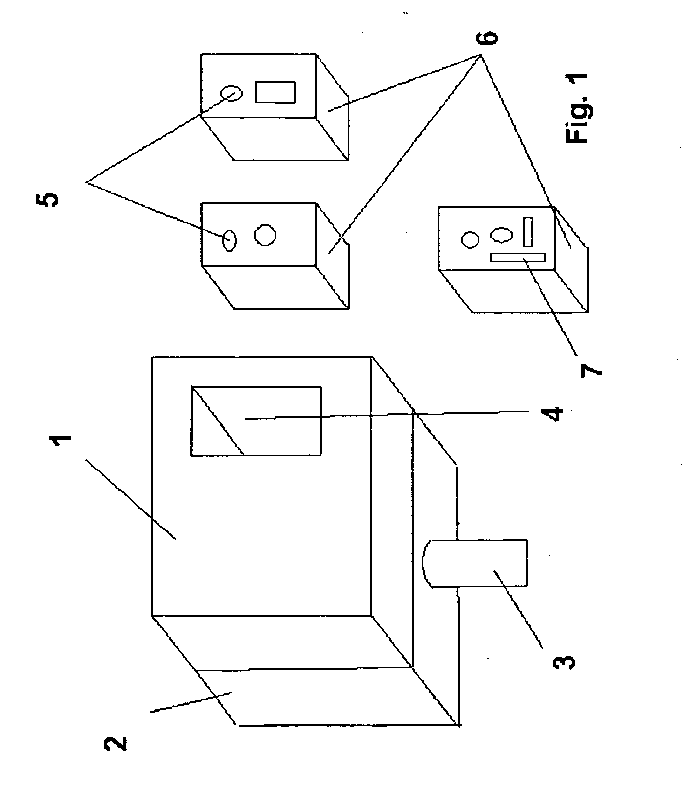

In der Figur 1 ist eine erfindungsgemäße Vorrichtung symbolisiert.

Der Antrieb weist ein Gehäuse auf, das aus Gehäuseteilen 1, 2 zusammengesetzt ist. Das Gehäuseteil 2 umgibt die elektromechanischen Bereiche, also den Elektromotor und das Getriebe, dessen abtreibende Welle 3 aus dem Gehäuse herausragt. Das Gehäuseteil 2 umgibt den elektronischen Bereich, wie Ansteuerelektronik oder Umrichterelektronik sowie Steuerelektronik und dergleichen.

Wichtig ist, dass ein Gehäuseteil 1 eine Ausnehmung 4 aufweist, die in hoher Schutzart ausgeführt ist und keine elektrischen Kontakte zur Umgebung hin ausweist. Dabei ist wichtig, dass die Ausnehmung gehäusebildende Oberfläche des Antriebs darstellt und somit dicht ausgeführt ist. Vorzugsweise ist die Ausnehmung als Gehäusetasche ausgebildet.

In die Ausnehmung 4 ist ein Modul 6 einführbar, das je nach Ausführungsart Eingabe-und/oder Anzeigemittel 5 und/oder elektrische Steckverbinderteile 7 umfasst.

Als Modul 6 ist also ein Modul mit Potentiometer, Drehknöpfen Tastern und/oder Schaltern ausführbar. Mit diesen Eingabemitteln sind Parameter des Antriebs beeinflussbar.

Alternativ ist ein Modul 6 verwendbar mit anderen Eingabemitteln.

Weiter ist auch ein Modul alternativ einsetzbar, das Anzeigemittel, wie Leuchtmittel und/oder akustische Mittel, wie Lautsprecher, Sirene und dergleichen umfasst.

Darüber hinaus sind auch Module einsetzbar, die Steckverbinder umfassen zum Anschließen von Feldbusteilnehmer, wie weiteren Antrieben oder Umrichtern oder Industriegeräten. An diesen oder anders ausgeführten Steckverbindern sind auch Rechner anschließbar zu Inbetriebnahme oder Parametrierung des Antriebs.

Wichtig ist auch, dass das Modul je nach Ausführungsart sogar Steckverbinder zum Anschließen Aktoren oder Sensoren umfassen.

Eines der Module umfasst eine Infrarot-Schnittstelle und/oder eine Funkwellenschnittstelle, wie Bluetooth oder dergleichen.

Mittels der Gehäusetasche ist der Antrieb sozusagen abgeschlossen ausgebildet. Die Energieversorgung sowie der Datenaustausch vom Antrieb zum Modul 6 erfolgt berührungslos durch die Ausnehmungsoberfläche hindurch.

Vorzugsweise ist die Oberfläche der Ausnehmung 4 aus Kunststoff ausgebildet. Im Inneren hinter der Oberfläche ist also eine Spule vorsehbar, die induktiv gekoppelt ist mit einer Spule im Inneren des Moduls 6. Allerdings ist die Kopplung schwächer als bei einem Transformator ausgeprägt.

Bei sehr schwacher Kopplung wird daher die Spule im Inneren des Moduls 6 mit einem derart dimensionierten, in Serie oder parallel geschalteten Kondensator in Resonanz betrieben, dass die Resonanzfrequenz der Frequenz des in die im Inneren des Antriebs befindliche Spule eingespeisten Stromes im Wesentlichen gleicht. Somit ist ein hoher Wirkungsgrad erreichbar.

Eines der Module 6 ist daher derart ausführbar, dass es auch eine 24 Volt Versorgung von weiteren verbundenen elektronischen Komponenten gewährleisten kann.

Bei weiteren erfindungsgemäßen Ausführungsbeispielen ist statt des Antriebs auch ein Umrichter mit der beschriebenen Ausnehmung 4 ausstattbar und erreicht somit ebenfalls die erfindungsgemäßen Vorteile.

Wichtig ist bei der Erfindung, dass durch die Ausnehmung und die genannte Spule im Inneren des Antriebs oder Umrichters eine mechanische und auch induktive Schnittstelle geschaffen ist, an der verschiedenartige Module anschließbar sind. Je nach Anwendung, also Applikation des Antriebs oder Umrichters, sind dann verschiedene Module anschlleßbar.

Es ist sogar ein Modul funktionsabhängig austauschbar: Beispielsweise wird bei einer Wartung oder Inbetriebnahme oder anders veranlassten Parametrierung ein Modul mit Steckverbinder oder berührungsloser Schnittstelle eingesetzt, um eine Datenaustauschverbindung zu einem Laptop herzustellen. Nach Beendigung der Wartung oder Inbetriebnahme oder anders veranlassten Parametrierung wird das Modul ausgetauscht gegen ein Modul, das nur einen Drehknopf umfasst, beispielsweise einen mit einem Potentiometer verbundenen Drehknopf, oder andere Eingabemittel mit eingeschränkter Möglichkeit zur Beeinflussung von Parametern. Alternativ ist ein Modul eingesetzt, das nur Anzeigemittel umfasst oder Anzeigemittel kombiniert mit den Eingabemitteln zu beschränkten Eingabemöglichkeit.

Bei weiteren erfindungsgemäßen Ausführungsbeispielen ist der Antrieb oder der Umrichter nur versorgt über seinen Netzversorgung. Der Datenaustausch zu anderen Geräten wird über höherfrequente Aufmodulation der Daten auf die Netzversorgungsleitungen bewirkt.

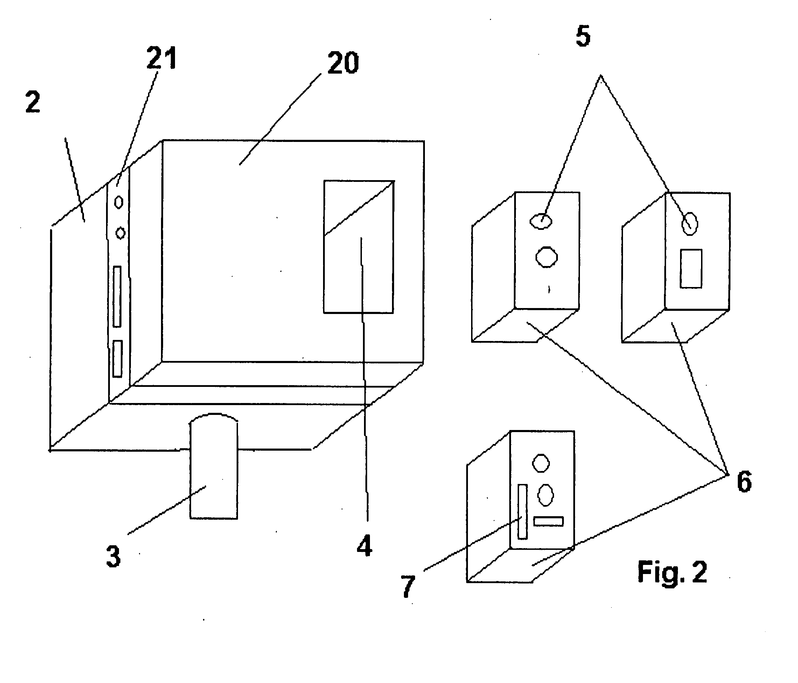

In Figur 2 ist eine weitere Variante gezeigt, bei der allerdings das die Ausnehmung 4 umfassende Gehäuseteil 20 nur über das Gehäuseteil 21 mit dem den Getriebemotor umfassenden Gehäuseteil 2 verbunden ist. Somit können Lager des Getriebes und des Motors ein gemeinsames Gehäuseteil verwenden und die Fertigungstoleranzen verbessert werden. Denn die spanende Bearbeitung der Lagerstellen erfolgt auf einer Aufspannung. Im Gehäuseteil 21 werden die Leitungen des Elektromotors, einer gegebenenfalls zugehörigen Bremse und/oder die Leitungen eines mit dem Elektromotor oder Getriebe verbundenen Sensors, wie Winkellagegeber, an Anschlussvorrichtungen, umfassend Steckverbinderteile, übergeben an das mit Steckverbinder aufsteckbare und dicht und in hoher Schutzart verbundene Gehäuseteil 20. Dieses Gehäuseteil umfasst die Leistungselektronik und Signalelektronik. Dabei wird die Wärme der Leistungselektronik abgeführt durch das Gehäuseteil 20 an die Umgebung. Somit ist eine große Entfernung der Wärmequellen Leistungselektronik und Motor sowie Getriebe realisiert und es treten weniger gegenseitige Beeinflussungen auf.

In Weiterbildung kann das Gehäuseteil 21 auch eine Wärmesperre umfassen oder selbst aus schlecht wärmeleitendem Material, wie Kunststoff, ausgeführt sein.

Im Gehäuseteil 20 ist also die Leiterplatte mit den Leistungshalbleitern direkt an der Innenseite des Gehäuseteils 20 angeordnet. Die Signalelektronik ist davon beabstandet angeordnet, insbesondere auf einer parallel angeordneten Leiterplatte. In Weiterbildung ist auch eine Wärmesperre zwischen Leistungs- und Signalelektronik vorsehbar.

## Patentansprüche

1. Antrieb,
der zumindest einen Elektromotor und eine diesen versorgende elektronische Schaltung, wie Umrichter oder Sanftanlaufelektronik, sowie ein modul umfasst,
**dadurch gekennzeichnet, dass**
das Modul (6) in einer gehäusebildenden Ausnehmung (4) des Antriebs einbringbar ist, wobei Energie und/oder Daten vom Antrieb an das Modul berührungslos übertragbar sind und das Modul Daten zurücksenden kann,
wobei das Modul (6) in der Ausnehmung (4) des Antriebs mechanisch gehalten ist, insbesondere eingeklipst ist,
wobei das Modul (6) Eingabe- und/oder Anzeigemittel (5) und/oder eine Steckverbinderschnittstelle (7) umfasst,
wobei das Modul (6) eine 24 Volt-Versorgungsquelle für elektrisch mit dem Modul (6) verbindbare weitere Geräte aufweist, wobei die Energie für die 24 Volt-Versorgungsquelle induktiv von einer Spule im Inneren des Gerätes an das Modul (6) übertragen ist,
wobei das Gerät aus Netzversorgungsleitungen versorgt ist, insbesondere an diese angeschlossen ist, auf denen auch Daten zum Datenaustausch zwischen dem Gerät und weiteren Geräten höherfrequent aufmoduliert sind.

2. Antrieb nach Anspruch 1,
**dadurch gekennzeichnet, dass**
der Antrieb ein Getriebe umfasst, das vom Elektromotor antreibbar ist.

3. Antrieb nach mindestens einem der vorangegangenen Ansprüche,
**dadurch gekennzeichnet, dass**
das Gerät eine mechanische, insbesondere eine formschlüssige, und elektromagnetische kontaktfreie, insbesondere induktive, Schnittstelle derart aufweist, dass Module (6) mit entsprechender mechanischer und elektromagnetischer kontaktfreier, insbesondere induktiver, Schnittstelle wahlweise verbindbar sind.

4. Antrieb nach mindestens einem der vorangegangenen Ansprüche,
**dadurch gekennzeichnet, dass**
die Ausnehmung (4) eine Kunststoffoberfläche zur äußeren Umgebung hin aufweist.

5. Antrieb nach mindestens einem der vorangegangenen Ansprüche,
**dadurch gekennzeichnet, dass**
das Gerät berührungslos, insbesondere induktiv aus einem Primärleiter, versorgt ist, in den ein mittelfrequenter Strom, insbesondere mit einer Frequenz zwischen 20 und 100kHz, eingespeist ist, wobei auf den Primärleiter auch Daten zum Datenaustausch zwischen dem Gerät und weiteren Geräten höherfrequent als mit der Mittelfrequenz des Stromes im Primärleiter aufmoduliert sind.

6. Antrieb nach mindestens einem der vorangegangenen Ansprüche,
**dadurch gekennzeichnet, dass**
der Antrieb einen ersten Gehäusebereich (2), umfassend Elektromotor und gegebenenfalls Getriebe, umfasst und einen dritten Gehäusebereich (20), der mit dem ersten nur über einen zweiten (21) verbunden ist.

7. Antrieb nach Anspruch 6,
**dadurch gekennzeichnet, dass**
der zweite Gehäusebereich (21) Anschlussvorrichtungen für die Versorgungsleitungen des Elektromotors umfasst und eine Steckverbindereinheit zur elektrischen Steckverbindung mit dem dritten Gehäuseteil (20).

8. Antrieb nach Anspruch 6 oder 7,
**dadurch gekennzeichnet, dass**
die Gehäuseteile (1, 2, 20, 21) jeweils dicht und in hoher Schutzart verbunden sind.

## Claims

1. Drive,
which includes at least one electric motor and an electronic circuit supplying the electric motor, such as a converter or soft-start electronics, and also a module,
**characterised in that**
the module (6) is insertable into a housing-forming recess (4) of the drive, energy and/or data being transmittable in a contactless manner from the drive to the module, and the module being capable of sending data back,
the module (6) being held mechanically in the recess (4) of the drive, in particular being clipped in,
the module (6) including input means and/or indicating means (5) and/or a plug connector interface (7),
the module (6) having a 24 Volt supply source for additional devices electrically connectable to the module (6), the energy for the 24 Volt supply source being transmitted inductively from a coil in the interior of the device to the module (6),
the device being supplied from, and in particular connected to, mains supply lines, onto which data are also modulated at higher frequency for the data exchange between the device and additional devices.

2. Drive according to Claim 1,
**characterised in that**
the drive includes a gear unit drivable by the electric motor.

3. Drive according to at least one of the preceding claims,
**characterised in that**
the device has a mechanical, in particular a form-locking, and electromagnetic contactless, in particular inductive, interface of such a kind that modules (6) having a corresponding mechanical and electromagnetic contactless, in particular inductive, interface are connectable, as desired.

4. Drive according to at least one of the preceding claims,
**characterised in that**
the recess (4) has a plastic surface towards the external environment.

5. Drive according-to at least one of the preceding claims,
**characterised in that**
the device is supplied in a contactless manner, in particular inductively from a primary conductor, into which a medium-frequency current, in particular having a frequency between 20 and 100 kHz, is fed, wherein data for the data exchange between the device and additional devices is also modulated onto the primary conductor at a higher frequency than the medium frequency of the current in the primary conductor.

6. Drive according to at least one of the preceding claims,
**characterised in that**
the drive includes a first housing region (2), including the electric motor and, if applicable, the gear unit, and a third housing region (20), which is connected to the first only via a second (21).

7. Drive according to Claim 6,
**characterised in that**
the second housing region (21) includes connection devices for the supply lines of the electric motor and a plug connector unit for the electrical plug connection to the third housing part (20).

8. Drive according to Claim 6 or 7,
**characterised in that**
the housing parts (1, 2, 20, 21) are each connected in an impervious manner and with a high degree of protection.

## Revendications

1. Entraînement, qui comprend au moins un moteur électrique et un montage électronique alimentant ce dernier, tel qu'un convertisseur ou une unité électronique de démarrage en douceur, ainsi qu'un module,
**caractérisé en ce que** le module (6) peut être inséré dans un évidement formant un logement (4) de l'entraînement,
sachant que de l'énergie et/ou des données peuvent être transmises sans contact de l'entraînement au module, et que le module peut renvoyer des données,
sachant que le module (6) est maintenu mécaniquement dans l'évidement (4) de l'entraînement, en particulier par clipsage,
sachant que le module (6) comprend des moyens (5) de saisie et/ou d'affichage et/ou une interface (7) à connecteur enfichable,
sachant que le module (6) présente une source d'alimentation 24 Volts pour d'autres appareils pouvant être reliés électriquement au module (6), sachant que l'énergie pour la source d'alimentation 24 Volts est transmise au module (6) par une bobine à l'intérieur de l'appareil,
sachant que l'appareil est alimenté à partir de lignes d'alimentation secteur, en particulier est raccordé à ces lignes, sur lesquelles sont également modulées à une plus haute fréquence des données pour l'échange de données entre l'appareil et d'autres appareils.

2. Entraînement selon la revendication 1, **caractérisé en ce que** l'entraînement comprend une transmission à engrenage, qui peut être entraînée par le moteur électrique.

3. Entraînement selon au moins une des revendications précédentes, **caractérisé en ce que** l'appareil présente une interface mécanique, en particulier à complémentarité de forme, et électromécanique sans contact, en particulier inductive, de telle sorte que des modules (6) dotés d'une interface mécanique, en particulier à complémentarité de forme, et électromécanique sans contact, en particulier inductive, correspondante peuvent être sélectivement reliés.

4. Entraînement selon au moins une des revendications précédentes, **caractérisé en ce que** l'évidement (4) présente une surface en matière plastique tournée vers l'environnement extérieur.

5. Entraînement selon au moins une des revendications précédentes, **caractérisé en ce que** l'appareil est alimenté sans contact, en particulier par induction, à partir d'un conducteur primaire dans lequel est alimenté un courant à moyenne fréquence, en particulier avec une fréquence comprise entre 20 et 100 kHz, sachant que des données pour l'échange de données entre l'appareil et d'autres appareils sont également modulées sur le conducteur primaire à une plus haute fréquence que la fréquence moyenne du courant dans le conducteur primaire.

6. Entraînement selon au moins une des revendications précédentes, **caractérisé en ce que** l'entraînement comprend une première zone de boîtier (2), comprenant le moteur électrique et éventuellement la transmission à engrenage, et une troisième zone de boîtier (20), qui n'est reliée à la première que par l'intermédiaire d'une deuxième zone de boitier (21).

7. Entraînement selon la revendication 6, **caractérisé en ce que** la deuxième zone de boitier (21) comprend des dispositifs de raccordement pour les lignes d'alimentation du moteur électrique, et une unité de connecteur enfichable pour la connexion électrique enfichable avec la troisième partie de boîtier (20).

8. Entraînement selon la revendication 6 ou 7, **caractérisé en ce que** les parties de boîtier (1, 2, 20, 21) sont respectivement reliées de manière hermétique et avec un degré de protection élevé.
